# EUROPEAN PATENT SPECIFICATION

(11) **EP 1 424 519 B1**
(45) Date of publication and mention of the grant of the patent: **14.06.2006**
(21) Application number: 03380248.9
(22) Date of filing: 27.10.2003
(51) Int. Cl.: F16K 31/04

(54) **Magnetic gas control valve**
Magnetventil für Gasdurchflusssteuerung
Soupape magnétique de contrôle de débit de gaz

(30) Priority: 29.10.2002 DE 20216686 U
(43) Date of publication of application: 02.06.2004
(73) Proprietor: Pauden Scientific & Technological Co. Ltd., Taipei, Sanchung City (TW); Geyser Gastech S.A., 20570 Bergara (Gipuzkoa) (ES)
(72) Inventor: Huang, Chun-Chen, No 111-32. Sec.4, San Ho Rd. Sanchung (TW)
(74) Representative: Fernandez Guzman, Juan

(56) References cited:
- EP-A- 0 383 353
- DE-B- 1 099 297
- GB-A- 452 124
- US-B1- 6 220 571

## Description

### TECHNICAL FIELD

The present invention refers to a magnetic valve, more particularly to a magnetic valve for controlling the flow of gas, which essentially comprises a main part, a storage space, a connecting pipe, a valve lever and a valve pin by which a valve mouth is opened and closed.

### PRIOR ART

A magnetic valve for controlling the flow of gas in a water heater that is connected to a gas valve casing is already known. The gas valve casing comprises tubes between the gas supply source and the water heater (gas burner). The gas valve casing comprises a sleeve for coupling up with the magnetic valve, and a gas inlet and gas outlet. It comprises, between the gas inlet and the gas outlet, a valve mouth that can be blocked by the valve pin. In practice, when using the water heater (gas burner), the magnetic valve can actuate the valve pin so that the valve pin can be moved in the opposite direction to the valve mouth, in order to open the valve mouth, so that the passage between the gas inlet and the gas outlet can be permitted. The gas can therefore be supplied from the gas inlet through the open passage between the valve pin and the valve mouth and, also, through the gas outlet to the place of combustion. The flow of gas is controlled by the position of the valve pin.

However, a conventional magnetic valve, in principle, is made so that excess pressure on both surfaces of a membrane is controlled by the movement of a magnetic part and the membrane moves in the direction of the surface with low pressure in order to activate the valve lever, which works with the valve pin, and to enable the valve pin to continue moving in the opposite direction to the valve mouth, so that the valve mouth can be opened to supply gas. The disadvantage of said known constructions is that, while the magnetic part is moving, the excess pressure on both surfaces of the membrane can suddenly change, so that the membrane suddenly moves in the direction of the surface with low pressure. If the valve mouth is opened suddenly, the gas is supplied instantly to the water heater (to the gas burner), leading to a risk of a jet of flame.

GB 452124 discloses a magnetic mechanism that comprises most of the features of the preamble of claim 1, but it is not a valve for controlling the flow of gas in water heaters.

### DISCLOSURE OF THE INVENTION

The main object of the invention is to provide a magnetic valve for controlling the flow of gas, so that the opening of the passage of gas is made gradually, thus avoiding the risk of a jet of flame.

The magnetic valve according to the preamble of claim 1 comprises a main part, a storage space, a connecting pipe, a valve lever and a valve pin. The magnetic valve also comprises an actuating device placed in the main part. The actuating device is driven by a motor and acts on a revolving lever. The revolving lever has a threaded section.

The magnetic valve also comprises a cam disc that has a sleeve with threading inside coupled to the revolving lever, so that there is an articulated connection between the cam disc and the revolving lever. Besides, a magnetic element and a magnetic part are arranged respectively on the cam disc and the valve lever, or vice versa.

When the revolving lever rotates, its threaded section acts on the cam disc. The direction in which the cam disc moves is controlled in accordance with the direction in which the revolving lever rotates. If the cam disc moves in the direction of the valve mouth and the magnetic element is magnetically attracted to the magnetic part, the cam disc and the revolving lever can be magnetically attracted to each other once the magnetic part has been switched on. If the revolving lever continues acting on the cam disc and the cam disc moves with the revolving lever in the opposite direction to the valve mouth, the threaded section of the revolving lever can actuate the valve pin to gradually open the valve mouth, enabling a slow movement of the valve pin and avoiding a sudden jet of flame.

The magnetic valve of the invention according to claim 1.

A circulation tube in the valve mouth, in contact with the inner surface of the valve mouth, connected to the front surface of the valve pin, said circulation tube having a groove in its wall, said groove gradually growing from one end of the valve pin in the direction of the valve mouth, so that, while the valve pin is being opened, the protruding width of the groove gradually grows through the edge of the valve mouth in accordance with the distance in which the valve pin has moved, so that the gas can circulate through the valve mouth via the section protruding through the edge of the valve mouth and, while the valve pin is being opened, the flow of gas increases to ensure that a constant supply of gas is maintained.

Besides, the rotating lever comprises, at both ends of the threaded section, a flat section, which does not work with the sleeve with threading inside. When the cam disc reaches a determined position in its movement, the threaded section of the revolving lever will not screw on to the sleeve with threading inside, and the flat section of the revolving lever will contact the threaded sleeve, and so the cam disc will not work with the rotation of the revolving lever, avoiding excessive twisting of the revolving lever and compression of the cam disc.

Lastly, the magnetic valve also comprises a buffer spring in a determined position of the cam disc movement, for avoiding an impact or excess pressure on the cam disc while moving, and also to allow the sleeve with threading inside to screw on to the threaded section, so that it can work and move the cam disc with the revolving lever at the same time, while rotating the revolving lever in a negative direction.

These and other advantages and features will become apparent in view of the figures and the detailed description of the invention.

### DESCRIPTION OF THE DRAWINGS

FIG. 1 is a cross-sectional view of an embodiment of the invention.
FIG. 2 is a cross-sectional view of the embodiment of FIG. 1, in which the cam disc is actuated via the actuating device until the magnetic element is magnetically attracted to the magnetic part.
FIG. 3 is a cross-sectional view of the embodiment of FIG. 1, in which the cam disc is in contact with the valve lever.
FIG. 4 is a cross-sectional view of the embodiment of FIG. 1, in which the actuating device is actuating the valve pin in the opposite direction to the valve mouth.
FIG. 5 is a cross-sectional view of the embodiment of FIG. 1, in which the actuating device is actuating the cam disc up to a determined position.
FIG.6 is a schematic view of an embodiment of the valve pin and the circulation tube.
FIG. 7 is a schematic view of the embodiment of FIG. 6, in which the circulation tube is shown slightly protruding through the edge of the valve mouth.
FIG. 8 is a schematic view of the embodiment of FIG. 6, in which the circulation tube is shown protruding almost totally from the edge of the valve mouth.
FIG. 9 is a diagram of the circulation deviation curves during the opening of a valve mouth of a conventional valve pin in the form of a disc and during the opening of a valve pin that comprises a circulation tube according to the invention.

### DETAILED DISCLOSURE OF THE INVENTION

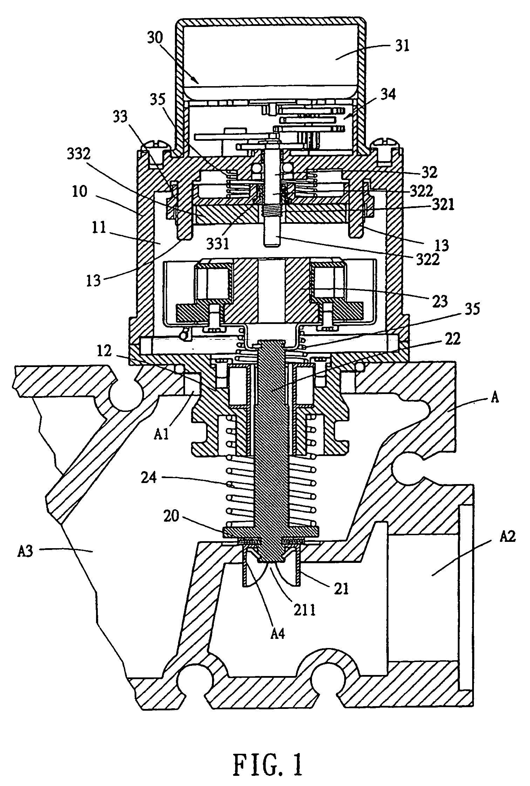

As shown in figure 1, the magnetic valve for controlling the flow of gas according to the invention, essentially comprises a main part (10), a storage space (11), a connecting pipe (12), a valve lever (22), a valve pin (20) and a valve mouth (A4). The main part (10) couples with a gas valve casing (A) and contains a storage space (11) to house any related operating devices and a connecting pipe (12) for coupling up with the sleeve (A1) of the gas valve casing (A). The connecting pipe (12) has a valve lever (22). One end of this valve lever (22) penetrates inside the main part (10), and the other end of this valve lever (22) has a valve pin (20) which penetrates inside the gas valve casing (A), so that the valve pin (20) can close the valve mouth (A4) between the gas inlet (A2) and the gas outlet (A3) of the gas valve casing (A), in order to close the passage between the gas inlet (A2) and the gas outlet (A3) of the gas valve casing (A). In practice, the valve pin (20) can be moved in the opposite direction to the valve mouth (A4), assisted by the magnetic valve, to enable the valve mouth (A4) and the passage between the gas inlet (A2) and the gas outlet (A3) to open, and so that the gas can be supplied from the gas inlet (A2) through the open passage between the valve pin (20) and the valve mouth (A4), and also, through the gas outlet (A3) in the gas burner (not shown in the drawing). The flow of gas can then be controlled by the open position of the valve pin (20).

In the main part (10), the magnetic valve according to the invention also has an actuating device (30) actuated by a motor (31) in order that the motor (31) drives the revolving lever (32). The presence and use of a regulating device (34) between the motor (31) and the revolving lever (32) enable the rotations of the revolving lever (32) to be reduced. The revolving lever (32) has a threaded section (321) and the revolving lever (32) has an articulated connection with a cam disc (33). The cam disc (33) has a sleeve with threading inside (331) which screws on to the threaded section (321) of the revolving lever (32). Also, guiding parts (13), which are joined with an articulated connection to the cam disc (33), are mounted in the storage space (11) of the main part (10), so that they can restrict the rotation of the cam disc (33). While the revolving lever (32) is rotating, the cam disc (33) can be moved along the revolving lever (32) by the action of the threaded section (321) and restriction of the guiding parts (13).

There are also a magnetic element (332) and a magnetic part (23) located on both the cam disc (33) and the valve lever (22), so that the magnetic element (332) and the magnetic part (23) can be magnetically attracted to each other, once switched on. In the drawing, the magnetic element (332) is on the cam disc (33) and the magnetic part (23), for example, on the valve lever (22). The magnetic element (332) and the magnetic part (23) can also be in opposite positions. If the revolving lever (32) rotates, its threaded section (321) can also work at the same time with the cam disc (33). The direction in which the cam disc (33) moves is controlled in accordance with the direction in which the revolving lever (32) rotates, either in the opposite direction to the valve mouth (A4) or in the direction towards the valve mouth (A4). If the cam disc (33) moves in the direction of the valve mouth (A4) and the magnetic element (332) is magnetically attracted to the magnetic part (23), the cam disc (33) and the valve lever (22) can be magnetically attracted to each other, once the magnetic part is switched on (23). If the revolving lever (32) continues actuating the cam disc (33) and the cam disc (33) moves with the revolving lever (32) in the opposite direction to the valve mouth (A4), the threaded section (321) of the revolving lever (32) can work properly with the valve pin (20), to gradually open the valve mouth (A4), so that movement of the valve pin (20) can be reduced and a sudden jet of flame avoided.

Besides, a recoil spring (24) is also mounted on the valve pin (20), between the valve lever (22) and the connecting pipe (12), which is pre-mounted on the main part (10). If the magnetic part (23) is disconnected, this recoil spring (24) can immediately press on the valve lever (22) until the valve pin (20) reaches the blocking position in the valve mouth (A4), to close off the gas supply. In the invention herein, there is a flat section (322) in both surfaces of the threaded section (321) of the revolving lever (32), which does not work with the threaded sleeve (331). If the cam disc (33) reaches a determined position in its movement, the threaded section (321) of the revolving lever (32) will not screw on to the sleeve with threading inside (331) and it is the flat section (322) of the revolving lever (32) which will screw on to the sleeve with threading inside (331), so that the cam disc (33) will not continue working with the rotation of the revolving lever (32), to avoid excessive twisting of the revolving lever (32) and compression of the cam disc (33). A buffer spring (35) can also be provided, preferably in a determined position of the cam disc (33) movement, to avoid any impact or excess pressure on the cam disc (33) while moving, as well as to allow the sleeve with threading inside (331) to engage with the threaded section (321), so that it can work and move the cam disc (33) with the revolving lever (32) at the same time while rotating the revolving lever (32) in a negative direction.

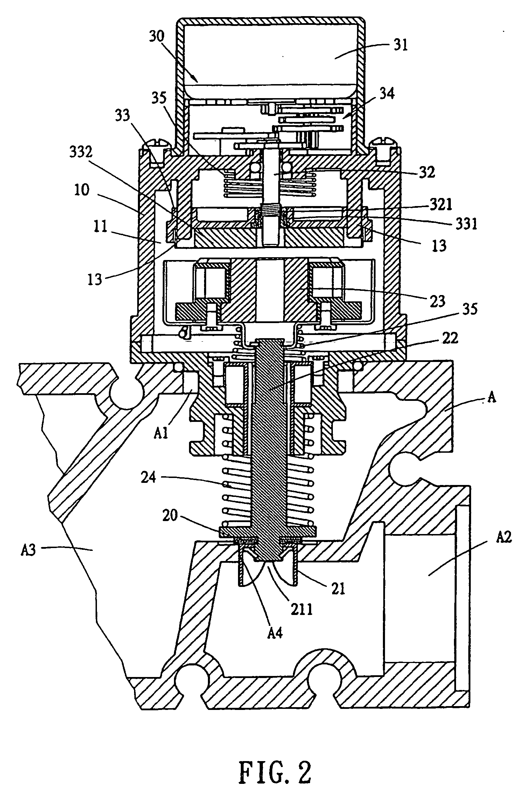

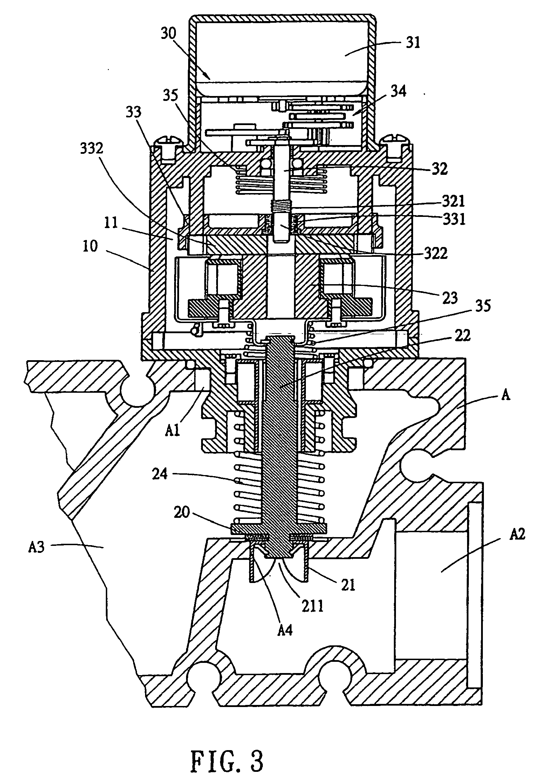

From figures 2 to 5 it can be seen that, if the revolving lever (32) is actuated by the motor (31) of the actuating device (30), it can work at the same time as the cam disc (33) and move in the direction of the valve mouth (A4) (as shown in figure 2). Once the threaded sleeve (331) of the cam disc (33) screws on to the threaded section (321) of the revolving lever (32), the cam disc (33) can move in the direction of the valve mouth (A4) helped by the threaded section (321). If the cam disc (33) moves to a determined position and touches the valve lever (22) (as shown in figure 3), the buffer spring (35) can work simultaneously, to avoid a massive impact or excess pressure between the cam disc (33) and the valve lever (22). Also, at the same time, the threaded section (321) of the revolving lever (32) disengages from the threaded sleeve (331) of the cam disc (33) and fixes the movement of the cam disc (33). With the magnetic part (23) switched on, it can now be magnetically attracted to the magnetic element (332) so that the cam disc (33) can be coupled to the valve lever (22).

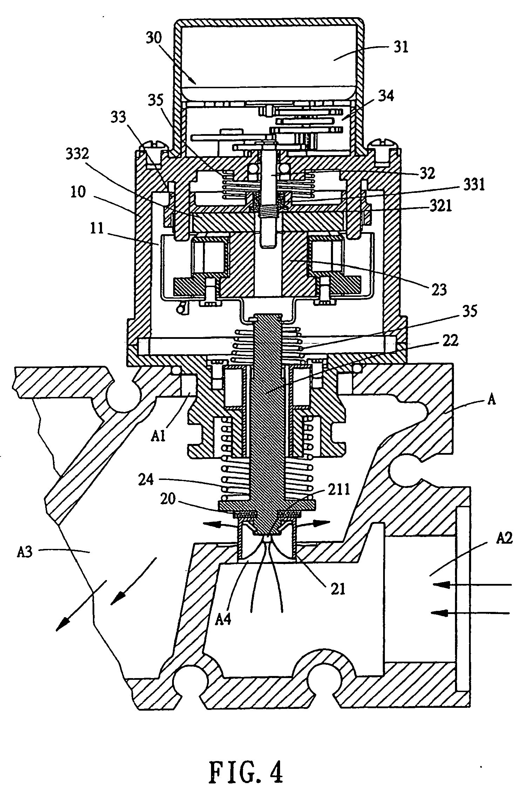

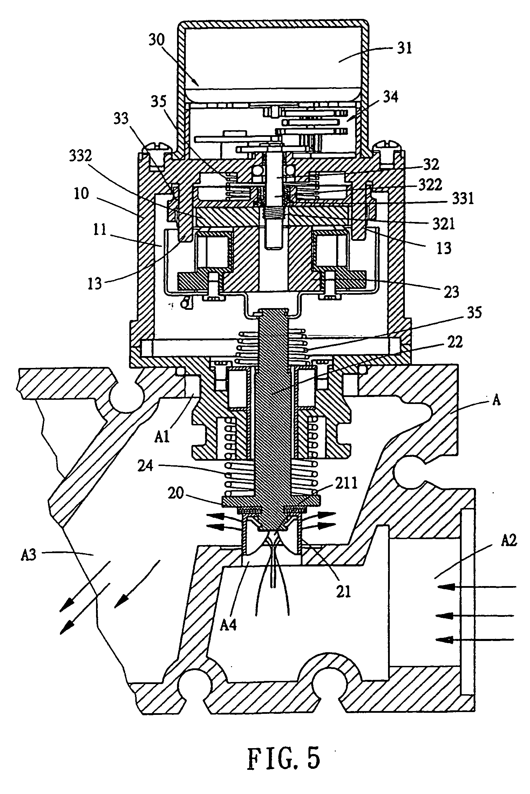

As soon as the cam disc (33) is attracted exactly to the valve lever (22) (as shown in figure 4), the motor (31) of the actuating device (30) will turn in a negative direction to actuate the revolving lever (32) and move the valve pin (20) in the opposite direction to the valve mouth (A4), until the valve mouth (A4) is sufficiently open to supply gas. Rotation of the motor (31) is then withheld so that the valve pin (20) can be maintained in said gas flow control position. As soon as the cam disc (33) reaches a determined position and the valve pin (20) is completely separated from the valve mouth (A4) (as shown in figure 5), the buffer spring (35) can work simultaneously, to avoid a separate impact or excess pressure between the cam disc (33) and the main part (10). Also, at the same time, the threaded section (321) of the revolving lever (32) disengages from the threaded sleeve (331) of the cam disc (33) to fix the movement of the cam disc (33) and avoid an impact or excess pressure on the cam disc (33).

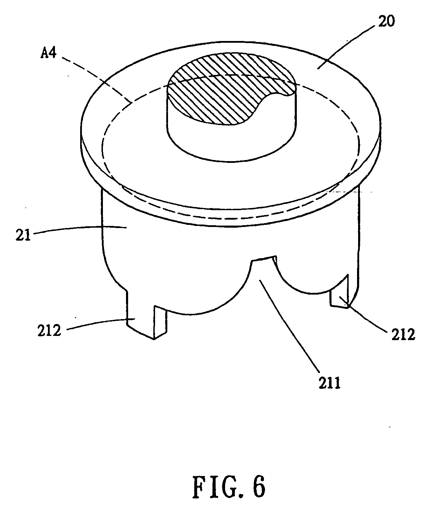

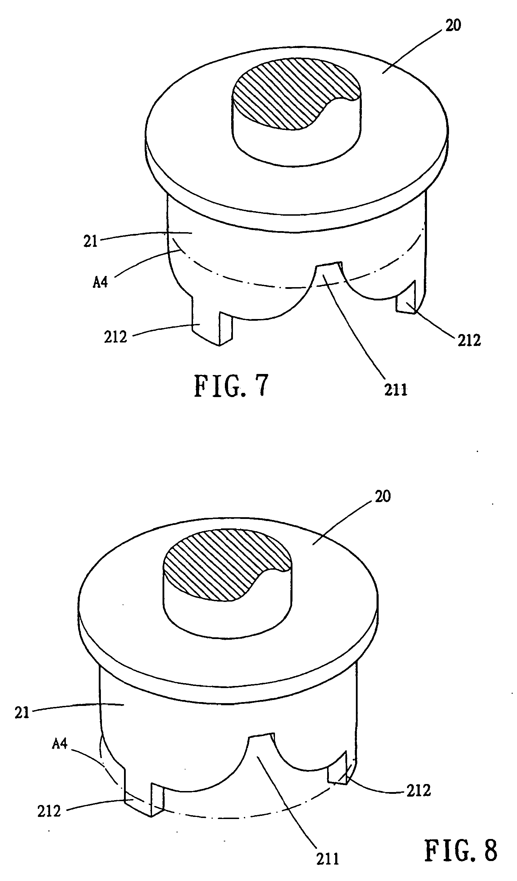

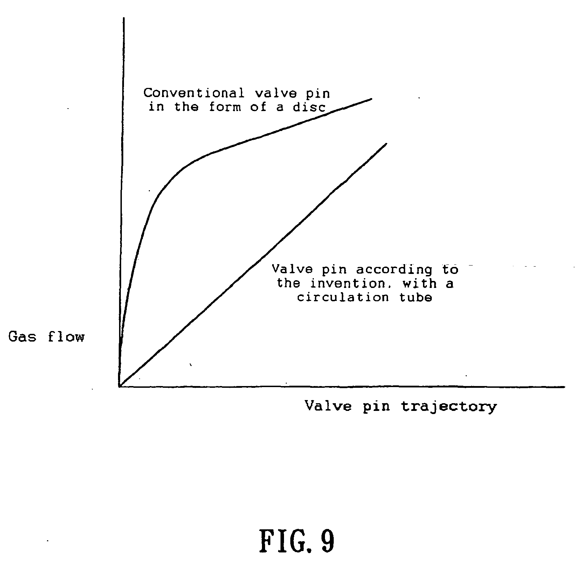

As can be seen in figures 1 to 6, there is a circulation tube (21) in the front surface of the valve pin (20) inserted into the valve mouth (A4) in contact with the inner surface of said valve mouth (A4). There is a groove (211) in the tube wall of the circulation tube (21) that gradually forms and grows from one end of the valve pin (20) in the direction of the valve mouth (A4) and, if the valve pin (20) moves in the direction of the valve mouth (A4) (as shown in figures 4 and 7), the groove (211) can protrude through the edge of the valve mouth (A4) while the valve pin (20) opens, allowing the gas to circulate through the valve mouth (A4) via the section protruding through the edge of the valve mouth (A4), and while the valve pin (20) is opening, gradually increases in accordance with the distance in which the valve pin (20) moves, so that the flow of gas can be slowly and regularly controlled and can be increased while the valve pin (20) opens, to obtain a constant supply of gas and ensure that gas is used (as shown in figure 9). Also, a plurality of extension parts (212) can be placed in the front end of the circulation tube (21), so that the valve pin (20), when completely open, as shown in figure 8, is coupled via the extension parts (212) with the inner surface of the valve mouth (A4) and, if the valve pin (20) completely closes the valve mouth (A4), the circulation tube (21) can be inserted into the valve mouth (A4).

## Claims

1. A magnetic valve for controlling the flow of gas, comprising
- a main part (10) that has a storage space (11);
- a connecting pipe (12) by which it is coupled to a casing (A) that has a gas inlet (A2), a gas outlet (A3) and a valve mouth (A4) between the gas inlet (A2) and the gas outlet (A3);
- a valve lever (22); and
- a valve pin (20), joined to said valve lever (22), by which the flow of gas through the valve mouth (A4) is regulated;
- an actuating device (30) actuated by a motor (31), and also comprises, in the storage space (11)
- a revolving lever (32), the actuating device (30) acting on said revolving lever (32) and the revolving lever (32) comprising a threaded section (321);
- a cam disc (33) comprising a sleeve with threading inside (331) that contacts with the threaded section (321) of the revolving lever (32);
- guiding parts (13) by which the rotation of the cam disc (33) is restricted, so that, while the revolving lever (32) is rotating, said cam disc (33) is displaced longitudinally in one direction or the other depending on the direction in which the revolving lever (32) is rotating; and
- a magnetic element (332) and a magnetic part (23), placed respectively on the cam disc (33) and on the valve lever (22), or vice versa, wherein, when the cam disc (33) moves in the direction of the valve lever (22) and once the magnetic part (23) has been switched on, the magnetic element (332) magnetically attracts the magnetic part (23), so that, by way of the rotation of the revolving lever (32), the cam disc (33) and the valve lever (22) are displaced together, making the valve pin (20) open the valve mouth (A4) gradually,
**characterised in that** it also comprises, in the front surface of the valve pin (20), a circulation tube (21) in contact with the inner surface of the valve mouth (A4), said circulation tube (21) comprising, in its lateral wall, a groove (211) that gradually grows from one end of the valve pin (20) in the direction of the valve mouth (A4), so that, while the valve pin (20) is opening, the protruding width of the groove (211) gradually grows through the edge of the valve mouth (A4) in accordance with the movement of the valve pin (20), so that the gas can circulate via the section protruding through the edge of the valve mouth (A4), and while the valve pin (20) is opening, the flow of gas increases to ensure that a constant supply of gas is maintained.

2. A magnetic valve according to claim 1, **characterised in that** the circulation tube (21) comprises extension parts (212) in its front end, so that the valve pin (20), when completely open, is coupled via the extension parts (212) to the inner surfaces of the valve mouth (A4), and when the valve pin (20) completely blocks the valve mouth (A4), the circulation tube (21) can be inserted into the valve mouth (A4).

3. A magnetic valve according to claim 1, **characterised in that** the revolving lever (32) comprises, at both ends of the threaded section (321), a flat section (322) that does not work with the sleeve with threading inside (331), so that, when the cam disc (33) reaches a determined position, the threaded section (321) does not screw on to the sleeve with threading inside (331), and it is the flat section (322) that contacts the threaded sleeve (331), so that the cam disc (33) does not work with the rotation of the revolving lever (32), avoiding excessive twisting of the revolving lever (32) and compression of the cam disc (33).

4. A magnetic valve according to any of the preceding claims, **characterised in that** it also comprises a buffer spring (35), preferably in the place of movement of the cam disc (33), so that any impact or excess pressure on the cam disc (33) while moving can be avoided, to help the sleeve with threading inside (331) to screw on to the threaded section (321), so that it can actuate and move the cam disc (33) with the revolving lever (32) at the same time, while rotating the revolving lever (32) in a negative direction.

5. A magnetic valve according to any of the preceding claims, **characterised in that** it also comprises a regulating device (34) between the motor (31) and the revolving lever (32), by which the rotations of the revolving lever can be reduced (32).

## Patentansprüche

1. Ein Magnetventil zur Gasdurchflusssteuerung, umfassend
- ein Hauptteil (10) mit einem Aufnahmeraum (11);
- einen Anschlussstutzen (12), über den es mit einem Gehäuse (A) verbunden ist, in dem ein Gaseinlass (A2), ein Gasauslass (A3) und eine Ventilöffnung (A4) zwischen dem Gaseinlass (A2) und dem Gasauslass (A3) angeordnet ist;
- einen Ventilhebel (22); und
- einen Ventilzapfen (20), der mit dem Ventilhebel (22) verbunden ist, über den der Gasdurchfluss durch die Ventilöffnung (A4)geregelt wird;
- ein mit einem Motor (31) betätigtes Stellglied (30), und ebenso umfassend im Aufnahmeraum (11)
- einen Drehhebel (32), wobei das Stellglied (30) auf den Drehhebel (32) einwirkt und der Drehhebel (32) einen Gewindeabschnitt (321) umfasst;
- eine Nockenscheibe (33), umfassend eine Innengewindebuchse (331), die mit dem Gewindeabschnitt (321) des Drehhebels (32) in Berührung ist;
- Führungsteile (13), durch die die Drehung der Nockenscheibe (33) eingeschränkt wird, so dass während der Drehung des Drehhebels (32) die Nockenscheibe (33), abhängig von der Richtung, in die der Drehhebel (32) dreht, längs in die eine bzw. die andere Richtung verschoben wird; und
- ein Magnetelement (332) und ein Magnetteil (23), angebracht auf der Nockenscheibe (33) bzw. dem Ventilhebel (22) oder umgekehrt, wobei sich die Nockenscheibe (33) in die Richtung des Ventilhebels (22) bewegt, und, sobald das Magnetteil (23) eingeschaltet ist, das Magnetelement (332) das Magnetteil (23) magnetisch anzieht, so dass durch die Drehung des Drehhebels (32) die Nockenscheibe (33) und der Ventilhebel (22) aufeinander zubewegt werden und verursachen, dass der Ventilzapfen (20) die Ventilöffnung (A4) schrittweise öffnet,
**dadurch gekennzeichnet, dass** es auch an der vorderen Fläche des Ventilzapfens (20) ein an der inneren Fläche der Ventilöffnung (A4) anliegendes Umlaufrohr (21) umfasst, wobei das Umlaufrohr (21) an seiner Seitenwand eine Rille (211) umfasst, die vom einen Ende des Ventilzapfens (20) in Richtung der Ventilöffnung(A4) kontinuierlich zunimmt, so dass, während der Ventilzapfen (20) öffnet, die hervorstehende Breite der Rille (211) über den Rand der Ventilöffnung (A4) mit der Bewegung des Ventilzapfens (20) kontinuierlich zunimmt, so dass das Gas durch den über den Rand der Ventilöffnung (A4) hervorstehenden Abschnitt strömen kann, und, während der Ventilzapfen (20) sich öffnet, der Gasdurchfluss zunimmt, um sicherzustellen, dass eine konstante Gasförderung beibehalten wird.

2. Ein Magnetventil nach Anspruch 1, **dadurch gekennzeichnet, dass** das Umlaufrohr (21) an seinem vorderen Ende Verlängerungen (212) umfasst, so dass der Ventilzapfen (20), wenn er komplett geöffnet ist, über die Verlängerungen (212) mit den Innenflächen der Ventilöffnung (A4) verbunden ist; und, wenn der Ventilzapfen (20) die Ventilöffnung (A4) komplett verriegelt, das Umlaufrohr (21) in die Ventilöffnung (A4) eingeführt werden kann.

3. Ein Magnetventil nach Anspruch 1, **dadurch gekennzeichnet, dass** der Drehhebel (32) an beiden Enden des Gewindeabschnitts (321) einen flachen Abschnitt (322) umfasst, der nicht mit der Innengewindebuchse (331) arbeitet, so dass, wenn die Nockenscheibe (33) eine bestimmte Stellung erreicht, der Gewindeabschnitt (321) sich nicht in die Innengewindebuchse (331) einschraubt und der flache Abschnitt (322) mit der Gewindebuchse (331) in Berührung ist, so dass die Nockenscheibe (33) nicht mit der Drehung des Drehhebels (32) arbeitet, wodurch ein übermäßiges Verdrehen des Drehhebels (32) und die Pressung der Nockenscheibe (33) verhindert werden.

4. Ein Magnetventil nach einem der obigen Ansprüche, **dadurch gekennzeichnet, dass** es ebenso eine Pufferfeder (35) vorzugsweise an der Stelle der Bewegung der Nockenscheibe (33) umfasst, so dass alle Stöße oder übermäßigen Druckbelastungen auf der Nockenscheibe (33) während der Bewegung verhindert werden, um die Innengewindebuchse (331) dabei zu unterstützen, sich auf den Gewindeabschnitt (321) zu schrauben, so dass er auf die Nockenscheibe (33) gleichzeitig mit dem Drehhebel (32) einwirken und diese bewegen kann, während sich der Drehhebel (32) in eine negative Richtung bewegt.

5. Ein Magnetventil nach einem der obigen Ansprüche, **dadurch gekennzeichnet, dass** es ebenso eine Regelvorrichtung (34) zwischen dem Motor (31) und dem Drehhebel (32) umfasst, mit dem die Drehung des Drehhebels (32) verringert werden kann.

## Revendications

1. Soupape magnétique pour le contrôle de l'écoulement des gaz comprenant :
- une pièce principale (10) dotée d'un espace de stockage (11) ;
- un tuyau de raccordement (12) grâce auquel elle est couplée à un boîtier (A) doté d'un orifice d'admission des gaz (A2), d'un orifice d'évacuation des gaz (A3) et d'un nez de valve (A4) placé entre l'orifice d'admission des gaz (A2) et l'orifice d'évacuation des gaz (A3) ;
- un culbuteur de soupape (22) ; et
- une goupille de soupape (20) reliée audit culbuteur de soupape (22), par lequel l'écoulement de gaz est détendu via le nez de valve (A4) ;
- un dispositif d'actionnement (30) actionné par un moteur (31) et comprenant également dans l'espace de stockage (11)
- un levier rotatif (32), le dispositif d'actionnement (30) agissant sur ledit levier rotatif (32) et ledit levier rotatif comprenant une section filetée (321) ;
- un disque à cames (33) comprenant une gaine dont la paroi intérieure est filetée (331) qui entre en contact avec la section filetée (321) du levier rotatif (32) ;
- des pièces de guidage (13) limitant la rotation du disque à cames (33), de manière à ce que, lorsque le levier rotatif (32) est en rotation, ledit disque à cames (33) effectue un déplacement linéaire dans un sens ou dans un autre en fonction du sens dans lequel le levier rotatif (32) tourne ; et
- un élément magnétique (332) et une pièce magnétique (23), placés respectivement sur le disque à cames (33) et sur le culbuteur de soupape (22) ou vice versa, dans lequel, lorsque le disque à cames (33) se déplace dans le sens du culbuteur de soupape (22) et une fois que la pièce magnétique (23) a été allumée, l'élément magnétique (332) attire automatiquement la pièce magnétique (23) de manière à ce que, au moyen de la rotation du levier rotatif (32), le disque à cames (33) et le culbuteur de soupape (22) soient déplacés en même temps, de telle manière que la goupille de soupape (20) ouvre progressivement le nez de valve (A4),
**caractérisée en ce qu'**elle comprend également, dans la face avant de la goupille de soupape (20), un tuyau de circulation (21) en contact avec la paroi interne du nez de valve (A4), ledit tuyau de circulation (21) comprenant, dans sa paroi latérale, une rainure (211) qui croît progressivement d'une extrémité de la goupille de soupape (20) vers le nez de valve (A4), de telle manière que la goupille de soupape (20) s'ouvre, la largeur en saillie de la rainure (211) croît progressivement à travers le rebord du nez de valve (A4) en suivant le mouvement de la goupille de soupape (20), afin que le gaz puisse circuler via la section en saillie à travers le rebord du nez de valve (A4), et lorsque la goupille de soupape (20) s'ouvre, l'écoulement de gaz augmente pour assurer le maintien d'une alimentation en gaz continue.

2. Soupape magnétique selon la revendication 1, **caractérisée en ce que** le tuyau de circulation (21) comprend des pièces d'extension (212) à son extrémité avant, de manière à ce que la goupille de soupape (20), lorsqu'elle est complètement ouverte, soit reliée via les pièces d'extension (212) aux parois internes du nez de valve (A4) et lorsque la goupille de soupape (20) bloque complètement le nez de valve (A4), le tuyau de circulation (21) peut être inséré dans ledit nez de valve (A4).

3. Soupape magnétique selon la revendication 1, **caractérisée en ce que** le levier rotatif (32) comprend, aux deux extrémités de la section filetée (321), une section plate (322) qui ne fonctionne pas avec la gaine dont la paroi interne est filetée (331), de telle manière que lorsque le disque à cames (33) atteint une position déterminée, la section filetée (321) ne se visse pas sur la gaine à la paroi interne filetée (331) et la section plate (322) soit en contact avec la gaine filetée (331), de manière à ce que le disque à cames (33) ne fonctionne pas sous l'effet de la rotation du levier rotatif (32) afin d'éviter toute torsion excessive du levier rotatif (32) et toute compression exagérée du disque à cames (33).

4. Soupape magnétique selon l'une quelconque des revendications précédentes, **caractérisée en ce qu'**elle comprend également un ressort amortisseur (35), de préférence à l'endroit où le disque à cames (33) est en mouvement, afin d'éviter tout impact ou pression excessive sur le disque à cames (33) en mouvement, pour favoriser le vissage de la gaine à la paroi interne filetée (331) sur la section filetée (321) de manière à ce qu'elle puisse actionner et déplacer le disque à cames (33) à l'aide du levier rotatif (32) en même temps, tout en tournant le levier rotatif (32) dans le sens contraire des aiguilles d'une montre.

5. Soupape magnétique selon l'une quelconque des revendications précédentes, **caractérisée en ce qu'**elle comprend également un détendeur (34) entre le moteur (31) et le levier rotatif (32) qui limite les rotations du levier rotatif (32).
